# EUROPÄISCHE PATENTSCHRIFT

(11) **EP 1 384 910 B1**
(45) Veröffentlichungstag und Bekanntmachung des Hinweises auf die Patenterteilung: **15.12.2004**
(21) Anmeldenummer: 03015429.8
(22) Anmeldetag: 09.07.2003
(51) Int. Cl.: F16D 13/58

(54) **Reibungskupplung**
Friction clutch
Embrayage à friction

(30) Priorität: 24.07.2002 DE 10233461; 28.08.2002 DE 10239401
(43) Veröffentlichungstag der Anmeldung: 28.01.2004
(73) Patentinhaber: ZF Sachs AG, 97424 Schweinfurt (DE)
(72) Erfinder: Link, Achim, Dipl.-Ing., 97422 Schweinfurt (DE); Berck, Rüdiger, Dipl.-Ing. (FH), 97464 Niederwerrnt (DE)

(56) Entgegenhaltungen:
- US-A- 5 314 051
- PATENT ABSTRACTS OF JAPAN vol. 005, no. 068 (M-067), 8. Mai 1981 (1981-05-08) & JP 56 020844 A (ATSUGI MOTOR PARTS CO LTD;OTHERS: 01), 26. Februar 1981 (1981-02-26)

## Beschreibung

Die Erfindung bezieht sich auf eine Reibungskupplung, insbesondere für Kraftfahrzeuge, mit einem Schwungrad, das von einer Kurbelwelle drehbar antreibbar ist, mit einem ringartigen Reibbelag einer auf einer drehbar gelagerten Getriebeantriebswelle drehfest angeordneten Kupplungsscheibe, mit einer Anpreßplatte, die axial auf ihrer einen Beaufschlagungsseite von dem radial äußeren Randbereich einer tellerartigen Membranfeder kraftbeaufschlagbar und dadurch mit ihrer anderen Seite gegen den Reibbelag preßbar ist und wobei die mit ihrer Ebene etwa radial zur Drehachse von Kurbelwelle und Getriebeantriebswelle gerichtete Membranfeder an ihrem radial inneren Bereich axial kraftbeaufschlagbar und um eine Kipplagerung im radial mittleren Bereich der Membranfeder schwenkbar ist, wobei die Membranfeder an ihrem radial äußeren Bereich eine etwa zur Beaufschlagungsseite der Anpreßplatte gerichtete Abkröpfung aufweist, mit der die Anpreßplatte kraftbeaufschlagbar ist.

Eine solche Reibungskupplung ist aus JP-A-56-020844 bekannt.

Bei derartigen Reibungskupplungen ist es bekannt, daß die Membranfeder im wesentlichen eben ist und mit ihrem ebenen radial äußeren Bereich eine axial an der Beaufschlagungsseite der Anpreßplatte hervorstehende Schneide der Anpreßplatte beaufschlagt. Dabei dient die Schneide dazu, daß das die Membranfeder bei deren Schwenkbewegung auf der Schneide eine Kippbewegung ausführen und an einer definierten Stelle kraftbeaufschlagen kann. Die Herstellung der Anpreßplatte ist aufwendig. Bei einer aus einem Metall gegossenen einteiligen Anpreßplatte muß sowohl die den Reibbelag beaufschlagende Reibfläche als auch die Schneide spanabhebend bearbeitet werden.

Bei einer einteiligen Stahl-Anpreßplatte muß die Schneide im Bereich der Reibfläche durch Tiefziehen erzeugt oder an dem Außendurchmesserbereich der Anpreßplatte angeformt und anschließend spanabhebend bearbeitet werden. Dazu sind jeweils mehrere Arbeitsgänge erforderlich.

Aufgabe der Erfindung ist es daher, eine Reibungskupplung der eingangs genannten Art zu schaffen, die bei einfachem Aufbau mit wenigen Arbeitsgängen herstellbar ist.

Diese Aufgabe wird erfindungsgemäß dadurch gelöst, daß die Abkröpfung mit ihrer radial umlaufenden, etwa zur Beaufschlagungsseite der Anpreßplatte gerichteten Stirnfläche eine Membranfeder-Schneide bildet, die an die Beaufschlagungsseite der Anpreßplatte anlegbar ist.

Durch diese Ausbildung kann die Anpreßplatte eine einfache, auf beiden Seiten plane Platte sein, während die Membranfeder in einem einzigen Stanz-/Biegearbeitsgang herstellbar ist.

Vorzugsweise erstreckt sich die Abkröpfung etwa rechtwinklig zur Ebene der Membranfeder.

Die Abkröpfung kann entweder ein geschlossener, radial umlaufender Ring sein oder aber auch aus einer Mehrzahl radial umlaufend im Abstand zueinander angeordneter Ringabschnitte bestehen.

Weist die Abkröpfung einen etwa radial zur Drehachse gerichteten ringartigen Endbereich auf, der an die Beaufschlagungsseite der Anpreßplatte anlegbar ist, so kann dieser Endbereich an einer Schneide der Anpreßplatte zur Anlage gelangen, die nur geringe Höhe aufweisen muß und so bei einer Stahl-Anpreßplatte durch einen einfachen Prägevorgang erzeugbar ist.

Um ein kontinuierliches Abrollen der Membranfeder-Schneide auf der Anpreßplatte zu ermöglichen, kann die Membranfeder-Schneide einen verrundeten Querschnitt besitzen,

Einfach herstellbar ist es, wenn die Anpreßplatte im Bereich der Beaufschlagung durch die Abkröpfung eine plane Beaufschlagungsfläche besitzt. Dies führt auch zu einer geringen axialen Baulänge der Reibungskupplung.

Damit die unter Kraftbeaufschlagung der Membranfeder auf die Anpreßplatte erfolgende geringe Radialbewegung der Abkröpfung auf der Anpreßplatte leichtgängig und weitgehend ohne Verschleiß ist, kann die Anpreßplatte und/oder die Abkröpfung in ihrem einander beaufschlagenden Bereich verschleißarm und/oder reibungsarm ausgebildet sein.

Dazu kann in einfacher Weise die Anpreßplatte und/oder die Abkröpfung in ihrem einander beaufschlagenden Bereich gehärtet oder mit einer verschleißarmen und/oder reibungsarmen Beschichtung versehen sein, wozu jegliche geeignete Materialien und Auftrag- bzw. Härtverfahren anwendbar sind.

Eine andere, ebenfalls einfach durchzuführende Maßnahme besteht dazu darin, daß an der Anpreßplatte und/oder der Abkröpfung an dem einander beaufschlagenden Bereich ein gehärtetes oder verschleißarmes und/oder reibungsarmes Bauteil angeordnet ist.

Einfach montierbar ist es dabei, wenn das gehärtete oder verschleißarme und/oder reibungsarme Bauteil form-, reib- oder kraftschlüssig an der Anpreßplatte und/oder der Abkröpfung befestigt ist.
Das gehärtete oder verschleißarme und/oder reibungsarme Bauteil kann aber auch in einer Ausnehmung vorzugsweise gleicher umlaufender Kontur auf der Beaufschlagungsseite der Anpreßplatte eingesetzt sein, wodurch die axiale Baulänge der Reibungskupplung nicht vergrößert wird.

Besteht die Anpreßplatte aus Stahl, so kann sie in einem einfachen Stanzvorgang aus einem Blech relativ geringer Dicke hergestellt werden, so daß auch die axiale Baulänge der Reibungskupplung gering ist.

Ist die Anpreßplatte ein metallisches Gußteil, so kann auch diese auf einfache Weise eine auf beiden Seiten plane Scheibe sein.

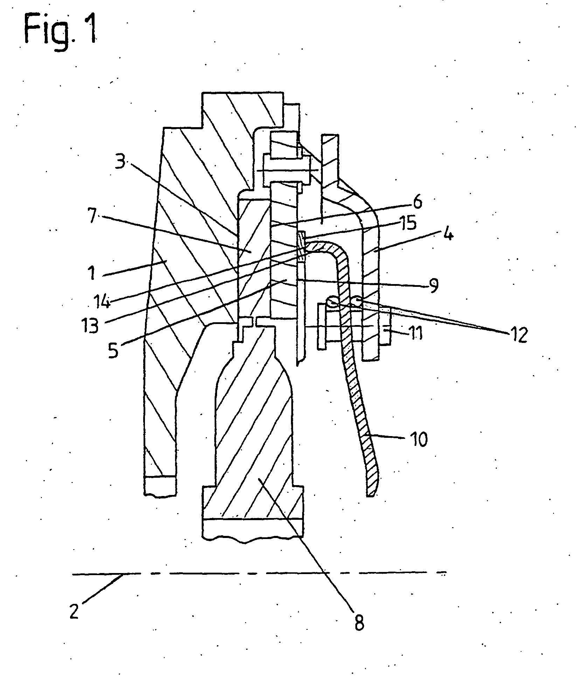

Ausführungsbeispiele der Erfindung sind in der Zeichnung dargestellt und werden im folgenden näher beschreiben. Es zeigen
- Figur 1: eine obere Hälfte einer Reibungskupplung im Querschnitt
- Figur 2: eine Ansicht eines ersten Ausführungsbeispiels einer Membranfeder
- Figur 3: einen Schnitt entlang der Linie II - II in Figur 2
- Figur 4: eine Ansicht eines zweiten Ausführungsbeispiels einer Membranfeder
- Figur 5: einen Schnitt entlang der Linie IV - IV in Figur 4
- Figur 6: eine perspektivische Ansicht der Membranfeder nach Figur 4 auf einer Anpreßplatte
- Figur 7: eine perspektivische Ansicht eines dritten Ausführungsbeispiels einer Membranfeder
- Figur 8: eine hälftige Querschnittsansicht eines nicht erfindungsgemäßen Beispiels einer Membranfeder mit einer Anpreßplatte.

Die dargestellten Reibungskupplungen besitzen ein Schwungrad 1, das von einer nicht dargestellten Kurbelwelle um eine Drehachse 2 drehbar antreibbar ist. Das Schwungrad 1 besitzt eine ringartige Reibfläche 3. Im radial äußeren Bereich ist an dem Schwungrad 1 ein Kupplungsdeckel 4 befestigt, der wiederum eine in den zwischen dem Schwungrad 1 und dem Kupplungsdeckel 4 gebildeten Raum ragende, aus Stahl bestehende ringförmige Anpreßplatte 5, 5' trägt.

Axial zwischen der Reibfläche 3 des Schwungrades 1 und einer Reibfläche 6 der Anpreßplatte 5 ist ein ringartiger Reibbelag angeordnet, der von einer Kupplungsscheibe 8 getragen wird. Die Kupplungsscheibe 8 ist auf einem als Keilwelle ausgebildeten Abschnitt einer nicht dargestellten Getriebeantriebswelle axial verschiebbar aber drehfest angeordnet, wobei sich die Getriebeantriebswelle koaxial zur Drehachse 2 erstreckt.

Die Anpreßplatte 5 besitzt auf ihrer der Reibfläche 6 axial abgewandten Seite eine Beaufschlagungsseite 9, auf der sie von dem radial äußeren Bereich einer Membranfeder 10 kraftbeaufschlagbar ist, wodurch die Anpreßplatte 5 gegen den Reibbelag 7 gepreßt und dieser zwischen den Reibflächen 3 und 6 des Schwungrades 1 und der Anpreßplatte 5 fest eingeklemmt wird. Dadurch entsteht eine drehfeste Verbindung der Kurbelwelle mit der Getriebeantriebswelle.

Die koaxial zur Drehachse 2 angeordnete tellerartige Membranfeder 10 erstreckt sich mit ihrer Ebene etwa radial zur Drehachse 2 und ist an ihrem mittleren Bereich über radial am Umfang verteilt angeordnete Distanzbolzen 11 an dem Kupplungsdeckel 4 gehalten. Die an dem Kupplungsdeckel 4 mit einem Ende befestigten Distanzbolzen 11 erstrecken sich durch Axialöffnungen 16 in der Membranfeder 10. Um die Distanzbolzen 11 ist auf jeder Seite der Membranfeder 10 ein Kippring 12 geführt. Durch axiale Beaufschlagung des inneren Bereichs der Membranfeder 10 zur Kupplungsscheibe 8 hin wird die normalerweise mit ihrem radial äußeren Bereich unter Vorspannung an der Anpreßplatte 5 anliegende Membranfeder 10 um den einen als Kipplagerung dienenden Kippring 12 mit ihrer Ebene so gekippt, daß sie von der Anpreßplatte 5 abhebt oder sie zumindest nicht mehr kraftbeaufschlagt. Damit ist die Verbindung der Kurbelwelle zur Getriebeantriebswelle gelöst.

Die Membranfeder 10 ist an ihrem radial äußeren Bereich mit einer zur Beaufschlagungsseite 9 der Anpreßplatte 5 gerichteten Abkröpfung 13 versehen, die an ihrem radial umlaufenden stirnseitigen Rand eine Membranfeder-Schneide 14 bildet, mit dem die Anpreßplatte 5 axial kraftbeaufschlagbar ist. Die Membranfeder-Schneide 14 besitzt dabei einen verrundeten Querschnitt.

Zur Verschleißverhinderung und Reibungsreduzierung beaufschlagt die Membranfeder-Schneide 14 die Anpreßplatte 5 über ein an der Beaufschlagungsseite 9 anliegendes, gehärtetes ringartiges Bauteil 15.

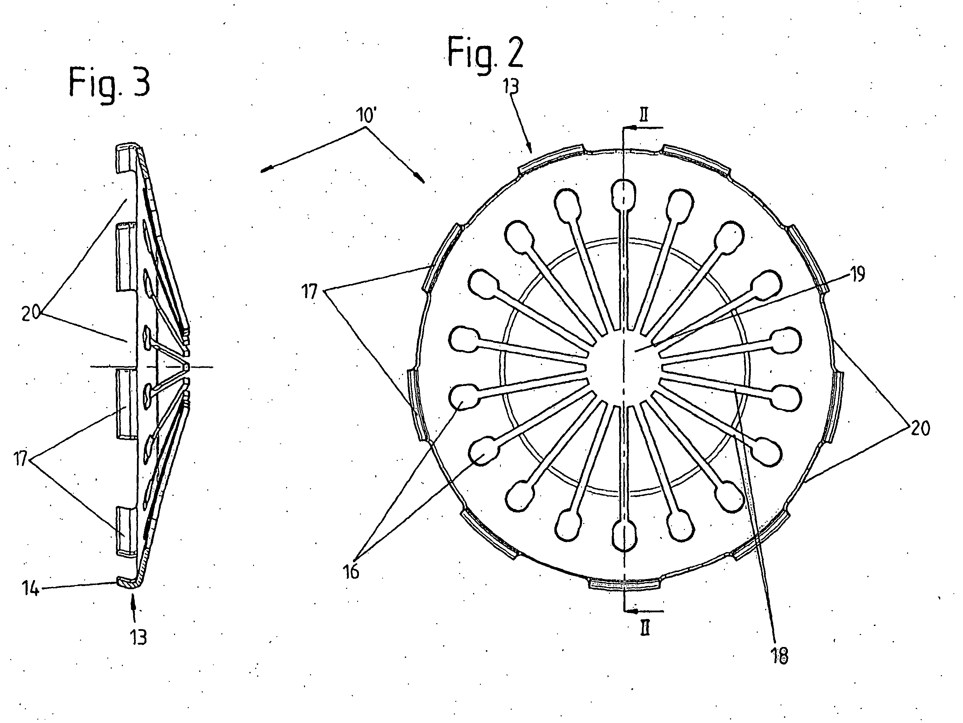

Bei der in den Figuren 2 und 3 dargestellten Membranfeder 10' besteht die Abkröpfung 13 aus einer Mehrzahl radial umlaufend im Abstand zueinander angeordneter Ringabschnitte 17 mit axial gerichteten Membranfederschneiden 14, die einen verrundeten Querschnitt aufweisen. In ihrem radial inneren Bereich ist die Membranfeder 10' mit radial gerichteten Schlitzen 18 versehen, die von den Axialöffnungen 16 ausgehen und offen in eine zentrische Bohrung 19 der Membranfeder 10' münden.

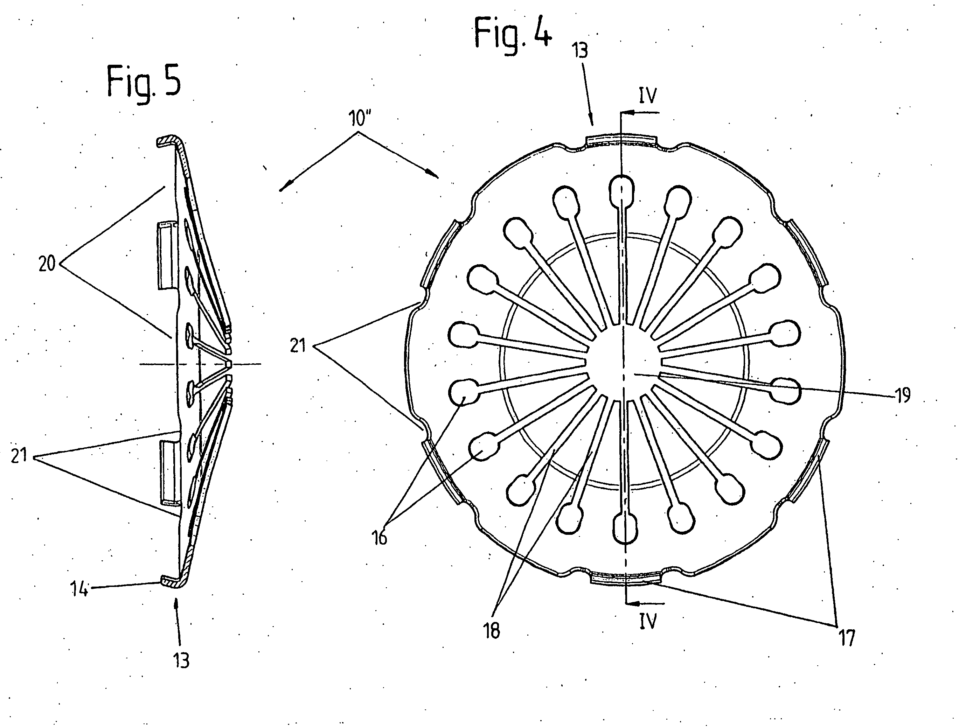

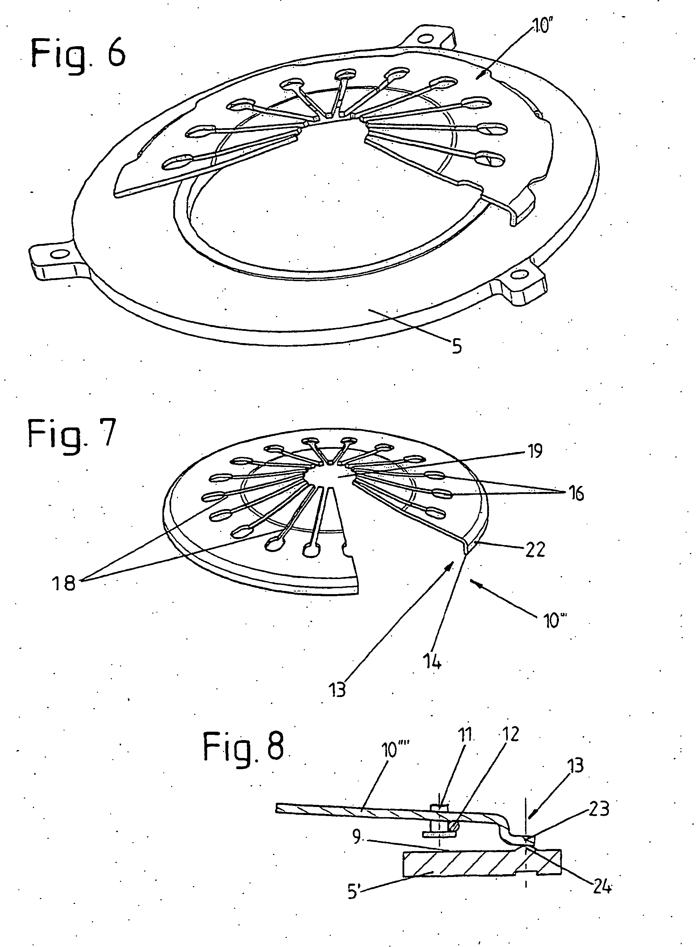

Die in den Figuren 4 bis 6 dargestellte Membranfeder 10" besitzt weitgehend den selben Aufbau wie die Membranfeder 10'. Unterschiedlich ist nur, daß der radial umlaufende Rand der Lücken 20 zwischen den Ringabschnitten 17 über eine sich in die Ebene der Membranfeder 10" erstreckende Einbuchtung 21 zu den Ringabschnitten 17 führt.
Bei dem Ausführungsbeispiel der Figur 7 ist die Abkröpfung 13 der Membranfeder 10'" als geschlossener, radial umlaufender Ring 22 ausgebildet.

In dem Beispiel der Figur 8 weist die Abkröpfung 13 der Membranfeder 10"" einen etwa radial zur Drehachse 2 nach außen gerichteten ringartigen Endbereich 23 auf, der an der Beaufschlagungsseite 9 der Anpreßplatte 5' anlegbar ist. Die Anpreßplatte 5' besitzt im Bereich der Beaufschlagung durch den ringartigen Endbereich 23 eine durch einen Prägevorgang erzeugte axial hervorstehende Schneide 24.

### Bezugszeichenliste

- 1: Schwungrad
- 2: Drehachse
- 3: Reibfläche
- 4: Kupplungsdeckel
- 5: Anpreßplatte
- 5': Anpreßplatte
- 6: Reibfläche
- 7: Reibbelag
- 8: Kupplungsscheibe
- 9: Beaufschlagungsseite
- 10: Membranfeder
- 10': Membranfeder
- 10": Membranfeder
- 10''': Membranfeder
- 10"": Membranfeder
- 11: Distanzbolzen
- 12: Kippring
- 13: Abkröpfung
- 14: Membranfeder-Schneide
- 1 5: ringartiges Bauteil
- 16: Axialöffnungen
- 17: Ringabschnitt
- 18: Schlitze
- 19: Bohrung
- 20: Lücke
- 21: Einbuchtung
- 22: Ring
- 23: ringartiger Endbereich
- 24: Schneide

## Patentansprüche

1. Reibungskupplung, insbesondere für Kraftfahrzeuge, mit einem Schwungrad, das von einer Kurbelwelle drehbar antreibbar ist, mit einem ringartigen Reibbelag einer auf einer drehbar gelagerten Getriebeantriebswelle drehfest angeordneten Kupplungsscheibe, mit einer Anpreßplatte, die axial auf ihrer einen Beaufschlagungsseite von dem radial äußeren Randbereich einer tellerartigen Membranfeder kraftbeaufschlagbar und dadurch mit ihrer anderen Seite gegen den Reibbelag preßbar ist und wobei die mit ihrer Ebene etwa radial zur Drehachse von Kurbelwelle und Getriebeantriebswelle gerichtete Membranfeder an ihrem radial inneren Bereich axial kraftbeaufschlagbar und um eine Kipplagerung im radial mittleren Bereich der Membranfeder schwenkbar ist wobei die Membranfeder (10, 10', 10", 10"',10"") an ihrem radial äußeren Bereich eine etwa zur Beaufschlagungsseite (9) der Anpreßplatte (5, 5') gerichtete Abkröpfung (13) aufweist, mit der die Anpreßplatte (5, 5') kraftbeaufschlagbar ist, **dadurch gekennzeichnet, daß** die Abkröpfung (13) mit ihrer radial umlaufenden, etwa zur Beaufschlagungsseite (9) der Anpreßplatte (5) gerichteten Stirnfläche eine Membranfeder-Schneide (14) bildet, die an die Beaufschlagungsseite (9) der Anpreßplatte (5) anlegbar ist.

2. Reibungskupplung nach Anspruch 1, **dadurch gekennzeichnet, daß** die Abkröpfung (13) sich etwa rechtwinklig zur Ebene der Membranfeder (10, 10', 10", 10"', 10"") erstreckt.

3. Reibungskupplung nach einem der vorhergehenden Ansprüche, **dadurch gekennzeichnet, daß** die Abkröpfung (13) ein geschlossener, radial umlaufender Ring (22) ist.

4. Reibungskupplung nach einem der Ansprüche 1 und 2, **dadurch gekennzeichnet, daß** die Abkröpfung (13) aus einer Mehrzahl radial umlaufend im Abstand zueinander angeordneter Ringabschnitte (17) besteht.

5. Reibungskupplung nach Anspruch 1, **dadurch gekennzeichnet, daß** die Membranfeder-Schneide (14) einen verrundeten Querschnitt besitzt.

6. Reibungskupplung nach einem der vorhergehenden Ansprüche, **dadurch gekennzeichnet, daß** die Anpreßplatte (5) im Bereich der Beaufschlagung durch die Abkröpfung (13) eine plane Beaufschlagungsfläche (9) besitzt.

7. Reibungskupplung nach einem der Ansprüche 1 bis 6, **dadurch gekennzeichnet,** da**ß** die Anpreßplatte (5) und/oder die Abkröpfung in ihrem einander beaufschlagenden Bereich verschleißarm und/oder reibungsarm ausgebildet ist.

8. Reibungskupplung nach Anspruch 7, **dadurch gekennzeichnet, daß** die Anpreßplatte und/oder die Abkröpfung in ihrem einander beaufschlagenden Bereich gehärtet oder mit einer verschleißarmen und/oder reibungsarmen Beschichtung versehen sind.

9. Reibungskupplung nach einem der Ansprüche 1 bis 7, **dadurch gekennzeichnet, daß** an der Anpreßplatte (5) und/oder der Abkröpfung an dem einander beaufschlagenden Bereich ein gehärtetes oder verschleißarmes und/oder reibungsarmes Bauteil (15) angeordnet ist.

10. Reibungskupplung nach Anspruch 9, **dadurch gekennzeichnet, daß** das verschleißarme und/oder reibungsarme Bauteil form-, reib- oder kraftschlüssig an der Anpreßplatte und/oder der Abkröpfung befestigt ist.

11. Reibungskupplung nach Anspruch 9, **dadurch gekennzeichnet, daß** das gehärtete oder verschleißarme und/oder reibungsarme Bauteil in einer Ausnehmung vorzugsweise gleicher umlaufender Kontur auf der Beaufschlagungsseite der Anpreßplatte eingesetzt ist.

12. Reibungskupplung nach einem der vorhergehenden Ansprüche, **dadurch gekennzeichnet, daß** die Anpreßplatte (5, 5') aus Stahl besteht.

13. Reibungskupplung nach einem der Ansprüche 1 bis 11, **dadurch gekennzeichnet, daß** die Anpreßplatte ein metallisches Gußteil ist.

## Claims

1. Friction clutch, in particular for motor vehicles, having a flywheel which can be driven rotationally by a crankshaft, having an annular friction lining of a clutch plate which is arranged fixedly on a rotatably mounted transmission input shaft so as to rotate with it, having a pressure plate whose one loading side can have force applied to it axially by the radially outer edge region of a plate-like diaphragm spring and whose other side can be pressed against the friction lining as a result, and it being possible to apply force to the radially inner region of the diaphragm spring which is oriented radially with respect to the rotational axis of the crankshaft and the transmission input shaft and to pivot it about a tilting bearing in the radially central region of the diaphragm spring, the diaphragm spring (10, 10', 10", 10''', 10'''') having, on its radially outer region, an angled-off portion (13) which is directed approximately towards the loading side (9) of the pressure plate (5, 5') and using which it is possible to apply force to the pressure plate (5, 5'), **characterized in that** the angled-off portion (13), with its radially circumferential end face directed approximately towards the loading side (9) of the pressure plate (5), forms a diaphragm-spring edge (14) which can be brought into contact with the loading side (9) of the pressure plate (5).

2. Friction clutch according to Claim 1, **characterized in that** the angled-off portion (13) extends approximately at right angles to the plane of the diaphragm spring (10, 10', 10", 10"', 10'''').

3. Friction clutch according to one of the preceding claims, **characterized in that** the angled-off portion (13) is a closed, radially circumferential ring (22).

4. Friction clutch according to either of Claims 1 and 2, **characterized in that** the angled-off portion (13) is composed of a plurality of ring sections (17) arranged in a radially circumferential manner at a distance from one another.

5. Friction clutch according to Claim 1, **characterized in that** the diaphragm-spring edge (14) has a rounded cross section.

6. Friction clutch according to one of the preceding claims, **characterized in that** the pressure plate (5) has a flat loading face (9) in the region where it is loaded by the angled-off portion (13).

7. Friction clutch according to one of Claims 1 to 6, **characterized in that** the pressure plate (5) and/or the angled-off portion are/is configured in their/its mutual loading region to be wear-resistant and/or low-friction.

8. Friction clutch according to Claim 7, **characterized in that** the pressure plate and/or the angled-off portion are/is hardened in their/its mutual loading region or are/is provided with a wear-resistant and/or low-friction coating.

9. Friction clutch according to one of Claims 1 to 7, **characterized in that** a hardened or wear-resistant and/or low-friction component (15) is arranged on the pressure plate (5) and/or the angled-off portion on the mutual loading region.

10. Friction clutch according to Claim 9, **characterized in that** the wear-resistant and/or low-friction component is fastened to the pressure plate and/or the angled-off portion with a form-fitting, frictional or force-transmitting connection.

11. Friction clutch according to Claim 9, **characterized in that** the hardened or wear-resistant and/or low-friction component is inserted into a recess preferably having an identical circumferential contour on the loading side of the pressure plate.

12. Friction clutch according to one of the preceding claims, **characterized in that** the pressure plate (5, 5') is composed of steel.

13. Friction clutch according to one of Claims 1 to 11, **characterized in that** the pressure plate is a metallic casting.

## Revendications

1. Embrayage à friction, notamment pour des véhicules automobiles, comportant un volant d'entraînement, qui peut être entraîné de manière rotative par un vilebrequin, comportant une garniture de friction de type anneau d'un disque d'embrayage disposé de manière solidaire en rotation sur un arbre de transmission rotatif, comportant une plaque de pressage, qui peut être sollicitée axialement sur un de ses côtés d'impact de la zone de bord radiale extérieure d'un diaphragme de type disque et qui est par conséquent pressée de son autre côté contre la garniture de friction et dans lequel le diaphragme, dont le niveau est orienté quelque peu radialement par rapport à l'axe de rotation du vilebrequin et de l'arbre de transmission, peut être sollicité axialement sur sa zone radiale interne et pivoter autour d'un palier pivotant dans la zone radiale médiane du diaphragme, dans lequel le diaphragme ( 10 , 10' , 10 " , 10 "' , 20 "" ) présente sur sa zone radiale extérieure une saillie (13) orientée approximativement vers le côté d'impact (9) de la plaque de pressage (5,5'), avec laquelle la plaque de pressage (5,5') peut être sollicitée, **caractérisé en ce que** la saillie (13) forme avec sa surface frontale radialement périphérique, orientée approximativement vers le côté d'impact (9) de la plaque de pressage (5) un tranchant de diaphragme (14), lequel repose sur le côté d'impact (9) de la plaque de pressage (5).

2. Embrayage à friction selon la revendication 1, **caractérisé en ce que** la saillie (13) s'étend approximativement sur un angle droit par rapport au niveau du diaphragme (10, 10', 10", 10"', 10"").

3. Embrayage à friction selon l'une des revendications précédentes, **caractérisé en ce que** la saillie (13) est un anneau (22) fermé, radialement périphérique.

4. Embrayage à friction selon l'une des revendications 1 et 2, **caractérisé en ce que** la saillie (13) est constituée d'une pluralité de sections d'anneau (17) radialement périphériques espacées les unes des autres.

5. Embrayage à friction selon la revendication 1, **caractérisé en ce que** le tranchant de diaphragme (14) possède une section transversale arrondie.

6. Embrayage à friction selon l'une des revendications précédentes, **caractérisé en ce que** la plaque de pressage (5) possède une surface de sollicitation (9) plane au niveau de la zone sollicitée par la saillie (13).

7. Embrayage à friction selon l'une des revendications 1 à 6, **caractérisé en ce que** la plaque de pressage (5) et/ou la saillie sont configurées de manière à résister à l'usure et/ou à la friction au niveau de leurs zones qui se sollicitent mutuellement.

8. Embrayage à friction selon la revendication 7, **caractérisé en ce que** la plaque de pressage et/ou la saillie sont, au niveau de leurs zones qui se sollicitent mutuellement, durcies ou pourvues d'un stratifié qui résiste à l'usure et/ou à la friction.

9. Embrayage à friction selon l'une des revendications 1 à 7, **caractérisé en ce qu'**un organe (15) durci ou résistant à l'usure et/ou à la friction est disposé sur la plaque de pressage (5) et/ou la saillie sur les zones qui se sollicitent mutuellement.

10. Embrayage à friction selon la revendication 9, **caractérisé en ce que** l'organe résistant à l'usure et/ou à la friction est fixé à la plaque de pressage et/ou la saillie de manière à former un ensemble complémentaire, en contact frictionnel et s'emboîtant.

11. Embrayage à friction selon la revendication 9, **caractérisé en ce que** l'organe durci ou résistant à l'usure et/ou à la friction est inséré dans un évidement présentant de préférence les mêmes contours périphériques sur le côté d'impact de la plaque de pressage.

12. Embrayage à friction selon l'une des revendications précédentes, **caractérisé en ce que** la plaque de pressage (5,5') est constituée d'acier.

13. Embrayage à friction selon l'une des revendications 1 à 11, **caractérisé en ce que** la plaque de pressage est une pièce moulée métallique.
